# EUROPÄISCHE PATENTSCHRIFT

(11) **EP 2 062 927 B1**
(45) Veröffentlichungstag und Bekanntmachung des Hinweises auf die Patenterteilung: **29.06.2016**
(21) Anmeldenummer: 07022467.0
(22) Anmeldetag: 20.11.2007
(51) Int. Cl.: C08G 18/36, C08G 18/10, C09J 175/04

(54) **2K-PU-Klebstoff für Tieftemperaturanwendungen**
2K-PU adhesive for low temperature applications
Agent adhésif 2K-PU pour utilisation à basse température

(43) Veröffentlichungstag der Anmeldung: 27.05.2009
(73) Patentinhaber: Henkel AG & Co. KGaA, 40589 Düsseldorf (DE)
(72) Erfinder: Thiele, Lothar, 405764 Langenfeld (DE); Gansow, Michael, 41516 Grevenbroich (DE); Aggias, Zissis, 40595 Düsseldorf (DE); Schlingloff, Nicole, 40593 Düsseldorf (DE)

(56) Entgegenhaltungen:
- EP-A- 0 395 228
- EP-B1- 0 951 493
- WO-A-02/053672
- GB-A- 2 111 512

## Beschreibung

Die Erfindung betrifft einen Zwei-Komponenten-Polyurethanklebstoff zum Verkleben von Metall- oder Kunststoffsubstraten, der eine elastische Verklebung solcher Substrate sicherstellen soll. Weiterhin wird die Verwendung geeigneter 2K-PU-Klebstoffe für Verklebungen mit einer guten Haftung auch bei niedrigen Temperaturen beschrieben.

In der DE 44 01 572 A1 werden zweikomponentige Polyurethan-Klebstoffe auf der Basis einer Isocyanat-Komponente und einer Polyol-Komponente beschrieben, welche neben einem oleochemischen Polyol 2 bis 7 Gew-%, bezogen auf das oleochemische Polyol, mindestens eines di- und/oder trifunktionellen Alkohols enthält und wobei die Hydroxylzahl der Alkohole 1100 bis 1850 beträgt. Diese Zusammensetzungen können zum Verkleben von starren oder flexiblen Substraten verwendet werden, insbesondere von Kunststoffen, Metallen, Glas oder Holz. Es werden keine zwei unterschiedlichen Isocyanate nacheinander umgesetzt.

Aus der EP 951 493 A1 ist ein NCO-Propolymer bekannt, das durch Reaktion von Polyolen mit zwei Diisocyanaten in zwei Stufen hergestellt wird. Dabei wird in der ersten Stufe Toluylendiisocyanat partiell umgesetzt und nach Abreagieren praktisch aller schnellen NCO-Gruppen ein Zwischenprodukt erhalten, in dem NCO und OH-Gruppen gleichzeitig am Polymer vorliegen, und dieses Zwischenprodukt mit Diphenylmethandiisocyanat umgesetzt. Als Polyole werden aliphatische Polyole oder Polyetherpolyole beschrieben. Das entstehende Prepolymer weist deswegen nur weniger reaktive NCO-Gruppen auf. Es kann als Kaschierklebstoff für Folien eingesetzt werden.

Das Dokument GB 2 111 512 A offenbart im Beispiel I 2-Komponenten-PUR-Klebstoffe. Es wird zuerst ein OH-Prepolymer aus Rizinusöl und TDI hergestellt. Dann wird das OH-Prepolymer mit einem Rizinusöl/MDI NCO-terminierten Prepolymer umgesetzt.

Weiterhin ist die EP 1 366 132 A1 bekannt. Es werden dort 2K-PU-Klebstoffe beschrieben, die in der Polyolkomponente oleochemische Polyole, andere Polyole und mindestens ein Harz gelöst enthalten müssen. Es werden bevorzugt Holzwerkstoffe verklebt. Es werden verschiedene weitere Substrate aufgezählt, unter anderem auch Glas, Metall oder Kunststoff, sowie verschiedene geeignete Isocyanate. Eine Auswahl der Isocyanate und der Einsatz von Urethangruppenhaltigen Polyolen wird nicht beschrieben.

Die im bekannten Stand der Technik beschriebenen Klebstoffe können unter verschiedenen Bedingungen aushärten. Sie haben jedoch im Prinzip den Nachteil, dass die Elastizität des Klebstoffs nicht ausreichend ist. Diese Elastizität, gemessen über das E-Modul, ist bei diesen Polymeren stark temperaturabhängig. Eine bei Raumtemperatur geeignete Verklebung ist deswegen bei niedrigen Temperaturen häufig spröde und gibt keine ausreichende Stabilität der Verklebung. Wird die Elastizität über Weichmacher eingestellt, können diese durch wechselnde Temperaturen aus den Klebstoffen ausschwitzen und so die Adhäsion zum Substrat negativ beeinflussen, sowie die Elastizität des vernetzten Bindemittels verschlechtern.

Aus diesem Stand der Technik ergibt sich die Aufgabe, einen Klebstoff bereitzustellen, der eine sichere Verklebung von Metallen oder Kunststoffoberflächen gestattet. Dabei soll eine Verklebung erzielt werden, die auch bei niedrigen Temperaturen und ggf. feuchten Bedingungen eine elastische Verklebung gewährleistet und bei einer Langzeitbelastung nicht versagt.

Gegenstand der Erfindung ist also ein 2-Komponenten-Polyurethanklebstoff bestehend aus einem OH-Polyurethanprepolymer, ggf. weiteren Polyolen sowie Additiven, hergestellt durch Umsetzung eines oleochemischen 2 bis 5 funktionellen Polyols und 5 bis 75 Gew.-% bezogen auf die Polyolkomponente weitere Polyole mit einem Molekulargewicht zwischen 200 bis 10000 g/mol mit einem Polyisocyanat A in einem NCO:OH-Verhältnis von 1:2 bis 1:5, und einer Vernetzerkomponente aus einem Polyisocyanats B, dadurch gekennzeichnet, dass das Polyisocyanat A eine gestreckte oder gewinkelte Form aufweist und das Polyisocyanat B ausgewählt wird aus Isocyanaten mit einer entgegengesetzten Form, wobei 20 bis 85 Mol.-% der Summe aus A und B eine gestreckte Form aufweisen müssen, die gestreckten Polyisocyanate nur in einer Komponente enthalten sind, und der vernetzte Klebstoff im Temperaturbereich zwischen -60 bis + 30 °C eine Änderung des E-Modul, gemessen nach EN ISO 527-1, von weniger als 4000 MPa aufweist.

Ein weiterer Gegenstand der Erfindung ist die Verwendung solcher 2-Komponenten-Polyurethan- Klebstoffe zum Verkleben von Substraten, die bei ihrer bestimmungsgemäßen Verwendung einem großen Temperaturgradienten ausgesetzt werden.

Als Substrate sind eine Vielzahl von Metall- oder Kunststoffsubstraten geeignet. Beispiele für solche Metalle sind Stahl, Edelstahl, Kupfer, Messing, Aluminium, eloxiertes Aluminium, Aluminiumlegierungen, für Kunststoffsubstrate ABS, Polystyrol, Polyamid, Polymethylmethacrylat (PMMA), Polyester, Polycarbonat, PVC. Es handelt sich dabei um feste Substrate, beispielsweise in Platten oder Blockform, es können aber ggf. auch dünne flexible Substrate verklebt werden.

Der erfindungsgemäße 2K-PU-Klebstoff besteht aus einer Polyolkomponente und einer Vernetzerkomponente. Die Polyolkomponente enthält mindestens ein OHfunktionelles PU-Prepolymer sowie ggf. weitere Polyole und Additive.

Das OH-funktionelle PU-Prepolymer wird durch Umsetzung von Polyolen mit einem Polyisocyanat hergestellt. Als mehrfach-funktioneller Polyol können im Allgemeinen die an sich bekannten 2 bis 5 funktionellen Polyole einzeln oder im Gemisch eingesetzt werden. Es soll sich insbesondere um Polyole mit einem Molekulargewicht von 200 bis 10 000 g/mol handeln, insbesondere von 400 bis 6000 g/mol (zahlenmittleres Molekulargewicht M_{N}, wie durch GPC erhältlich).

Als Polyol können beispielsweise oleochemische Polyole eingesetzt werden. Das sind Polyole auf Basis natürlicher Öle und Fette, z.B. die Reaktionsprodukte von epoxidierten Fettstoffen mit mono-, di- oder polyfunktionellen Alkoholen, oder Glycerinester langkettiger Fettsäuren, die zumindest teilweise mit Hydroxylgruppen substituiert sind.

Beispiele für solche Verbindungen sind Ringöffnungsprodukte epoxidierter Triglyceride, also epoxidierter Fettsäureglycerinester, bei denen die Ringöffnung unter Erhalt der Esterbindungen ausgeführt worden ist. Zur Herstellung der Ringöffnungsprodukte kann man von einer Vielzahl epoxidierter Triglyceride pflanzlichen oder tierischen Ursprungs ausgehen. So sind beispielsweise epoxidierte Triglyceride geeignet, die 2 bis 10 Gewichtsprozent Epoxidsauerstoff aufweisen. Derartige Produkte sind durch Epoxidierung der Doppelbindungen aus einer Reihe von Fetten und Ölen herstellbar, insbesondere epoxidierte Triglyceride.

Als Alkohole für die Ringöffnung der epoxidierten Triglyceride können Methanol, Ethanol, Propanol, Isopropanol, Butanol, Hexanol, 2-Ethylhexanol, Fettalkohole mit 6 bis 22 C-Atomen, Cyclohexanol, Benzylalkohol, 1,2-Ethanol, 1,2-Propandiol, 1,3-Propandiol, 1,4-Butandiol. 1,6-Hexandiol, Neopentylglykol, Trimethylolpropan, Glycerin, Trimethylolethan, Pentaerythrit, Sorbit sowie ethergruppenhaltige Hydroxyverbindungen wie Alkylglykole oder oligomere Glykole sowie oligomere Glycerine eingesetzt werden.

Eine weitere Gruppe der oleochemischen Polyole sind Ringöffnungs- und Umesterungsprodukte von epoxidierten Fettsäureestern niederer Alkohole, also von epoxidierten Fettsäuremethyl-, -ethyl-, -propyl- oder -butylestern. Bevorzugt sind hier die Ringöffnungs- oder Umesterungsprodukte mit Alkoholen der Funktionalität 2 bis 4, insbesondere die Umsetzungsprodukte mit Ethylenglykol, Propylenglykol, oligomeren Ethylenglykolen, oligomeren Propylenglykolen, Glycerin, Trimethylolpropan oder Pentaerythrit. Die Herstellung derartiger Produkte kann nach bekannten Epoxidations- oder Ringöffnungsverfahren erfolgen, wobei die Umesterung während oder nach dem Ringöffnungsschritt durch Entfernen des niederen Alkohols aus dem Reaktionsgleichgewicht durchgeführt werden kann.

Ebenfalls zu den oleochemischen Polyolen zählen die Umsetzungsprodukte epoxidierter Fettalkohole mit C2-C8-Alkoholen der Funktionalität 2 bis 50, insbesondere 2 bis 4.

Im Rahmen der Erfindung ist auch die Verwendung von oleochemischen Polyolen möglich, die über die Umesterung von di- oder polyfunktionellen Alkoholen wie z.B. dem Additionsprodukt von Ethylenoxid oder Propylenoxid an Glycerin mit Triglyceriden zugänglich sind.

Diese oleochemischen Polyole sollen Hydroxylzahlen von 50 bis 400 mg KOH/g, bevorzugt 100 bis 300 mg KOH/g aufweisen, das entspricht einem Molekulargewicht von ca. 250 bis 3000 g/mol.

Besonders bevorzugt ist die Verwendung von Rizinusöl, Dimerdiolen sowie solchen Polyesterpolyolen, die durch vollständige Ringöffnung von epoxidierten Triglyceriden eines wenigstens teilweise olefinisch ungesättigten Fettsäureenthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden.

Weiterhin sind ggf. als Polyole flüssige Polyester geeignet, die durch Kondensation von Di- bzw. Tricarbonsäuren, wie z.B. Adipinsäure, Sebacinsäure und Glutarsäure, mit niedermolekularen Diolen bzw. Triolen, wie z.B. Etylenglykol, Propylenglykol, Diethylenglykol, Triethylenglykol, Dipropylenglykol, 1,4-Butandiol, 1,6-Hexandiol, Glyzerin oder Trimethylolpropan, hergestellt werden können. Eine weitere Gruppe solcher einzusetzenden Polyole sind die Polyester auf der Basis von Lactonen, wie Polycaprolactone, sowie Polycarbonatpolyole. Dabei sollen diese Polyesterpolyole einen Molekulargewichtsbereich von 1000 bis 6000 g/mol, vorzugsweise im Bereich von 1000 bis 3000 g/mol aufweisen.

Weiterhin kann mindestens ein weiterer drei- oder mehrwertiger Polyol auf Basis von Polyethern enthalten sein. Es kann sich dabei um drei- oder höherfunktionelle Polyole handeln, wobei das Molekulargewicht von 1000 bis 10000 g/mol betragen soll. Besonders bevorzugt sind Polyole mit 3, 4 oder 5 OH-Gruppen, wie Additionsprodukte von Ethylen- und/oder Propylenoxid an Glycerin, Trimethylolpropan, Pentaerythrit oder Neopentylalkohol. Insbesondere sind polyfunktionelle Polyalkylenglykole im Molekulargewichtsbereich von 1000 bis 6000 g/mol geeignet, vorzugsweise im Bereich bis 3000 g/mol, insbesondere Polypropylenglykole. Es können auch statistische und/oder Blockcopolymere des Ethylenoxids und Propylenoxids eingesetzt werden. Eine weitere Gruppe von vorzugsweise einzusetzenden Polyetherpolyolen sind die Polytetramethylenglykole, die z.B. durch die saure Polymerisation von Tetrahydrofuran hergestellt werden können.

Es können auch zusätzlich niedermolekulare Polyetherpolyole eingesetzt werden. Es sind darunter die üblichen kommerziell erhältlichen Polyetherpolyole zu verstehen, die durch Umsetzung von 2 bis 3-wertigen Alkoholen wie Ethylenglykol Propandiol, Butandiol, Hexandiol, Octandiol, Glycerin, Hexantriol oder Zuckeralkohole mit Alkylenoxiden hergestellt werden können. Es können dabei die bekannten C₂ bis C₄-Alkylenoxide eingesetzt werden, wie Ethylenoxid, Propylenoxid oder Butylenoxid. Bevorzugt sind Polyethylen- oder Polypropylendiole oder Triole. Das Molekulargewicht diese Diole oder Triole kann dabei von ca. 200 bis zu 800 g/mol betragen, insbesondere zwischen 250 bis zu 600 g/mol. Über die Menge kann die Vernetzungsdichte und die Härte des Klebstoffs beeinflusst werden.

Erfindungsgemäß werden zur Herstellung des PU-Prepolymeren oleochemische Polyole eingesetzt. Zusätzlich werden noch andere Polyole eingesetzt, wobei die Menge bezogen auf die Summe aller in dieser Stufe eingesetzten Alkohole 5 bis 75 Gew.-% beträgt, bevorzugt zwischen 5 bis 65 Gew.-%.

Mehrere dieser Polyole werden erfindungsgemäß mit mindestens einem Polyisocyanat A umgesetzt zu einem OH-funktionellen PU-Prepolymer. Dabei werden die Isocyanate molar im Unterschuss eingesetzt, sodass nach Abreaktion aller NCO-Gruppen OH-terminierte PU-Prepolymere erhalten werden. Das NCO:OH-Verhältnis soll von 1:2 bis 1:5 betragen. Bei den erfindungsgemäß einzusetzenden Isocyanaten handelt es sich Isocyanate gestreckter oder gewinkelter Struktur. Es ist erfindungsgemäß wesentlich, dass die Isocyanate zur Herstellung des Prepolymeren und die Isocyanate der Vernetzerkomponente unterschiedliche Struktur besitzen. Es sollen also im OH-PU-Prepolymeren entweder überwiegend lineare oder überwiegend gewinkelte Isocyanate enthalten sein, wobei die Ausführungsform mit gewinkelten Isocyanaten bevorzugt ist.

Unter Polyisocyanaten mit gewinkelter Struktur sind solche Isocyanate zu verstehen, bei denen die NCO-Gruppen keine im wesentlichen lineare Anordnung bilden können. Beispiele dafür sind cyclische oder aromatische Diisocyanate mit nicht trans-ständigen NCO-Gruppen. Weiterhin sind Polyisocyanate mit 3 oder mehr NCO-Gruppen als gewinkelte Isocyanate anzusehen, beispielsweise alle Triisocyanate. Als gestreckte Polyisocyanate sind solche Diisocyanate zu verstehen die eine lineare Form einnehmen können, die beispielsweise im Fall von cyclischen oder aromatischen Isocyanaten para-ständige NCO-Gruppen aufweisen, oder aliphatische Isocyanate, die eine Orientierung der NCO-Gruppen in entgegengesetzter Richtung ermöglichen, wie endständig NCO-Gruppen aufweisende Alkyldiisocyanate.

Gewinkelte Isocyanate sind beispielsweise 1,3-Phenylendiisocyanat, Toluylendiisocyanat (TDI), 1,3-Xylylendiisocyanat (XDI), 1,3- Tetramethylxylylendiisocyanat (m-TMXDI), 1-Isocyanatomethyl-3-isocyanato-1,5,5-trimethylcyclohexan (IPDI), 1,6-Diisocyanato-2,4,4-trimethylhexan, 2,4'-Diphenylmethandiisocyanat (2,4-MDI), trimerisiertes IPDI-Uretdion, HDI-Biuret oder HDI-Isocyanurat. Weiterhin zählen polymere Isocyanate, wie PMDI zu den gewinkelten Isocyanaten.

Gestreckte Isocyanate sind beispielsweise 4,4'-Diphenylmethandiisocyanat (4,4'-MDI), hydriertes 4,4'-MDI (H12MDI), p-Tetramethylxylylendiisocyanat (TMXDI), 4,4'-Dibenzyldiisocyanat, 1,4-Phenylendiisocyanat, Tetramethoxybutan-1,4-diisocyanat, Hexan-1,6-diisocyanat (HDI), 1,5-Naphthylendiisocyanat, Ethylendiisocyanat, 1,12-Diisocyanatododecan und Dimerfettsäure-diisocyanat, 1,4-Diisocyanatbutan, Trimethylhexamethylendiisocyanat, Cyclohexan-1,4-diisocyanat, Tetraalkyldiphenylmethandiisocyanat, 1-Methyl-2,4-diisocyanato-cyclohexan, Umsetzungsprodukte von C₂ bis C₈- Diolen mit gestreckten Diisocyanaten oder dimerisierte gestreckte Diisocyanate mit Uretdionstruktur.
Solche Isocyanate sind kommerziell erhältlich. Dabei ist darauf zu achten, dass technische Isocyanate häufig Gemische verschiedener Isomere sind.

Es können auch Gemische gleichartiger Isocyanate eingesetzt werden. Erfindungsgemäß ist es notwendig, dass 20 bis 85 Mol.-%, bevorzugt 25 bis 70 Mol.-%, insbesondere 30 bis 60 Mol.-%, der Summe der Isocyanate A und B eine gestreckte Struktur aufweisen. Die gestreckten Isocyanate liegen bevorzugt nur in einem der Polyisocyanate A oder B vor, sie sollen also in der gleichen Reaktionsstufe vorhanden sein.
Im Allgemeinen werden als Polyisocyanat A und/oder als Vernetzer aromatische Isocyanate bevorzugt.

In der Polyolkomponente können zusätzlich zu dem OH-PU-Prepolymer noch weitere Polyole enthalten sein. Es kann sich dabei um die oben angeführte Polyole handeln, die als Überschuss bei der Umsetzung mit den Isocyanaten A vorhanden sind oder sie werden nachträglich zugegeben. Während bei der Prepolymersynthese zusätzlich zu den oleochemischen Polyolen bevorzugt Diole und gegebenenfalls anteilig Triole ausgewählt werden, können als später zugesetzte Polyole auch höherfunktionelle Alkohole ausgewählt werden. Die Menge aller zusätzlicher Polyole muss den Polyolüberschuss der ersten Stufe der OH-PU-Prepolymer-Synthese berücksichtigen sowie die notwendigen Mengenverhältnisse der Isocyanate A und B.

Als Vernetzerkomponente werden Polyisocyanate B eingesetzt. Diese werden getrennt von der Polyol-Komponente gelagert und erst unmittelbar vor der Verklebung mit der Polyol-Komponente gemischt.

Die Polyisocyanate B sind mehrfunktionell. Es handelt sich um die erwähnten Isocyanate. Die Polyisocyanate B im Vernetzer sollen eine entgegengesetzte Struktur aufweisen, wie die Isocyanate A des OH-PU-Prepolymeren. Werden aliphatische Isocyanate als Vernetzerkomponente eingesetzt, ist es zweckmäßig, dem Klebstoff einen Katalysator zuzusetzen. Insbesondere soll die Vernetzerkomponente aromatische, lineare Diisocyanate enthalten.

Das Verhältnis der in der Isocyanatkomponente enthaltenen NCO-Gruppen zu allen in der Polyolkomponenten enthaltenen OH-Gruppen liegt im Bereich 1,0:1 bis 2,0:1, wobei im Hinblick auf die Feuchtigkeit des Substrats ein geringer Überschuss an NCO-Gruppen zweckmäßig ist. Insbesondere liegt das Verhältnis zwischen 1,03:1 bis 1,7:1.

Die erfindungsgemäß einsetzbaren 2K-PU-Klebstoffe können weiterhin Hilfsstoffe enthalten, die vorzugsweise ganz oder teilweise der Polyolkomponente zugemischt werden. Darunter werden Stoffe verstanden, die in der Regel zugesetzt werden, um die Eigenschaften der wesentlichen Komponenten in gewünschter Richtung zu verändern, z.B. Verarbeitbarkeit, Lagerfähigkeit, Gebrauchseigenschaften dem Anwendungszweck anzupassen. Beispiele dafür sind Harze, fein verteilte Füllstoffe, Verlaufmittel, Entlüfter, Thixotropiermittel, Haftvermittler, Weichmacher Katalysatoren, Alterungsschutzmittel, UV-Stabilisatoren, Farbstoffe, Lösemittel und Netzmittel.

Die Polyol-Komponente kann zusätzlich ein Harz enthalten. Dabei handelt es sich um flüssige oder feste organische Produkte, für die eine mehr oder weniger breite Verteilung der relativen Molmasse charakteristisch ist. Sie weisen meistens eine amorphe Struktur auf. Es können die bekannten Harze verwendet werden, diese können natürlichen oder synthetischen Ursprungs sein. Die natürlichen Harze können sowohl pflanzlicher als auch tierischer Herkunft sein, es können auch Derivate eingesetzt werden. Die synthetischen Harze werden im allgemeinen durch Polymerisation oder Polykondensation gewonnen. Beispiele für Harze sind Kohlenwasserstoff-, Terpen-, Cumaron/Inden-, Furan-, Alkyd-, Aldehyd-, Keton-, Keton-/Aldehyd-, Phenol-, Glycerinester-, Polyester-, Epoxid-, Harnstoff-, Melamin-, Polyamid- und Isocyanat-Harze. Die Harze können auch OH-Gruppen enthalten, diese können dann mit in das Polymernetzwerk eingebaut werden.

Als Füllstoffe und/oder Pigmente geeignet sind gegenüber Isocyanaten nicht reaktive anorganische Verbindungen, wie Kreide, beschichtete Kreide, Kalkmehl, Calcium-Magnesium-Carbonate, Aluminiumoxide und -hydroxide, gefällte Kieselsäure, Titandioxid, Bariumsulfat, Zeolithe, Bentonite, Glas, Hohlkugeln, gemahlene Mineralien, soweit diese als Pulver vorliegen, d.h. eine Korngröße zwischen 1 bis 200 µm aufweisen, insbesondere zwischen 3 bis 50 µm. Solche Füllstoffe liegen nach dem Mischen in dem 2K-Polyurethan-Klebstoff dispergiert vor. Zugesetzte Zeolithe wirken gleichzeitig als Trocknungsmittel.

Lösemittel können zugesetzt werden, bevorzugt sind die Klebstoffe jedoch lösemittelfrei.

Die erfindungsgemäßen 2K-PU-Klebstoffe können bei Raumtemperatur direkt miteinander reagieren. Zur Beschleunigung der Reaktion, auch bei niedrigen Temperaturen, können jedoch Katalysatoren enthalten sein. Es handelt sich dabei um die bekannten metallorganischen Verbindungen, wie Zinnsalze von Carbonsäuren, wie Zinn-II-acetat, Di-n-octyl-Zinn-mercaptid, Dibutylzinn-maleat, -diacetat, -dilaurat, und -diethyl-hexoat, starke Basen, wie Alkali-Hydroxide, -Alkoholate und -Phenolate, oder Blei-phenyl-ethyl-dithiocarbaminat. Zusätzlich geeignet sind auch aliphatische oder cycloaliphatische tertiäre Amine. Beispiele für solche Amine sind Dialkylethanolamin mit C₁ bis C₃-Alkylresten, Trialkanolamin mit C₁ bis C₆- Alkanolgruppen, Tricyclohexanolamin, Diethanolphenylamin, Diazabicyclo-octan (DABCO), Triethylamin, Dimethyl-benzylamin, Bis-dimethylamino-ethylether, Tetramethylguanidin, Bis-dimethyl aminomethyl-phenol, 2,2'-Dimorpholinodiethylether, Bis(2-dimethylamino ethyl)ether, N,N-Dimethylpiperazin oder Diazabicycloundecan (DBU).

Die Katalysatoren können in Mengen zwischen 0,01 bis 3 Gew.-%, insbesondere zwischen 0,1 bis 2 Gew.-% enthalten sein. Insbesondere sind sie bei der Verwendung von aliphatischen Isocyanaten zweckmäßig. Insgesamt können die Hilfsstoffe zwischen 0 bis 70 Gew.-% bezogen auf die Polyolkomponente enthalten sein, bevorzugt zwischen 0,5 bis 50 Gew.-%.

Zur Herstellung des erfindungsgemäßen 2K-Polyurethan-Klebstoffs wird zunächst die Polyolkomponente hergestellt. Dazu werden die Polyole mit einem Unterschuss an linearem oder gewinkeltem Polyisocyanat A umgesetzt. Nach Ende der Reaktion können dann ggf. weitere Polyole zugesetzt werden. Weiterhin können ggf. andere Zusatzstoffe zugesetzt und untergemischt werden. Im Allgemeinen sind die Polyole flüssig, auch das Prepolymer soll bei ca. 25°C flüssig sein. Es ist jedoch auch möglich, dass die Polyolkomponente erst bei Erwärmen, beispielsweise bis zu 50°C, flüssig wird. Diese Ausführungsform ist jedoch weniger bevorzugt.

Die zweite Komponente ist der Vernetzer, bestehend aus Polyisocyanaten B. Dieser soll bevorzugt bei Applikationstemperatur ebenfalls flüssig sein. Diese zwei Komponenten werden bis zu ihrer Anwendung getrennt gelagert. Zur Anwendung werden diese beiden Komponenten in an sich bekannter Weise miteinander gemischt und das Gemisch auf die zu verklebenden Substrate aufgetragen. Der fertig vermischte Klebstoff soll bei der Applikationstemperatur dünnflüssig bis pastös und auch thixotrop sein.

Gemäß dem erfindungsgemäßen Verfahren werden die Substrate an der Oberfläche vor dem Verkleben von Verunreinigungen gereinigt, gegebenenfalls kann die Oberfläche geschliffen oder aufgerauht werden. Das kann beispielsweise durch Abblasen, Abstreifen, Abwischen oder Anschleifen geschehen. Eine Vorbehandlung, beispielsweise durch eine Coronabehandlung, durch Anlösen der Oberfläche mit halogenhaltigen Lösemitteln oder durch Auftragen eines Primers auf das Substrat, ist nicht notwendig. Auf das gereinigte Substrat wird der erfindungsgemäße Klebstoff, im vorgegebenen Mischungsverhältnis gemischt, aufgetragen. Die Schichtdicke soll zwischen 0,1 bis 1 mm betragen, insbesondere zwischen 0,2 bis 0,4 mm. Der Klebstoff kann auf eine Substratoberfläche aufgetragen werden, es ist jedoch auch möglich, dass beide Substratoberflächen mit dem Klebstoff beschichtet werden.

Insbesondere ist der erfindungsgemäße Klebstoff zum Verkleben von Metallsubstraten und Kunststoffsubstraten geeignet. Dabei kann die Temperatur von Substraten und Klebstoff zwischen 15 bis 70°C liegen, insbesondere zwischen 20 bis 35°C. Der Klebstoff kann mit an sich bekannten Verfahrensweisen aufgetragen werden, beispielsweise durch Pinseln, Sprühen, Rollen oder Walzen.

Danach werden beide Substrate zusammengefügt. Gegebenenfalls kann es zweckmäßig sein, die Substrate kurz miteinander zu verpressen, um sicherzustellen, dass keine Lufteinschlüsse zwischen den beiden Substraten vorhanden sind und einen vollflächigen Kontakt sicherzustellen. Solange der Klebstoff noch nicht ausgehärtet ist, ist es zweckmäßig, die Substrate gegeneinander zu fixieren.

Danach können die verklebten Substrate aushärten. Eine Aushärtung soll im Allgemeinen bei Temperaturen zwischen 15 bis 70°C durchgeführt werden, insbesondere bis 40°C. Bei einer erhöhten Temperatur ist eine schnellere Aushärtung zu beobachten. Es ist jedoch ausreichend, wenn bei niedrigen Temperaturen gearbeitet wird. Dann ist bevorzugt ein Katalysator in dem 2K-PU-Klebstoff vorhanden.

Die vernetzten Klebstoffe zeigen eine gute Haftung zu Kunststoff- und Metallsubstraten. Die Verklebung ist bei niedrigen Temperaturen stabil und flexibel. Unabhängig von einer theoretischen Erklärung wird angenommen, dass durch die Auswahl der Strukturen der Isocyanat-Bestandteile und die Zuordnung zu unterschiedlichen Verfahrensschritten sichergestellt wird, dass die Kohäsion des vernetzten Klebstoffs verbessert wird. Das kann durch Ausrichtung von gleichartigen Isocyanaten in Form von Mikrostrukturen geschehen, wobei diese eine Wechselwirkung miteinander eingehen und so zu einem hohen Modul beitragen. Durch die abwechselnden Strukturen wird auch bei niederen Temperaturen eine gute Elastizität sichergestellt.

Der vernetzte erfindungsgemäße Klebstoff weist nach Verklebung bei verschiedenen Applikationstemperaturen eine hohe Elastizität auf. Die Elastizität kann beispielsweise durch E-Modul (gemessen nach EN ISO 527-1) gemessen werden. Dabei weist der E-Modul bei Temperaturen von -60 bis +30°C eine Differenz unterhalb von 4000 MPa auf. Vernetzte Klebstoffe ähnlicher Zusammensetzung, die keine Isocyanate unterschiedlicher Struktur aufweisen, zeigen eine andere innere Struktur, die zu geringer Elastizität führt, d.h. der E-Modul ist stärker temperaturabhängig.

Durch eine Verwendung von erfindungsgemäß geeigneten PU-Klebstoffen zum Verkleben von Metall- oder Kunststoffsubstraten können Verklebungen hergestellt werden, die auch nach Belastung durch Luftfeuchtigkeit oder Kälte gute Elastizität aufweisen. Dabei wird diese Elastizität auch bei niedrigen Temperaturen erzielt, d.h. ein erfindungsgemäßer Klebstoff zeigt auch bei niedrigen Temperaturen eine gute Adhäsion, die die elastischen Kräfte aufnehmen kann, und damit eine stabile Verklebung.

Der erfindungsgemäß einsetzbare Klebstoff ist insbesondere geeignet, Bauteile zu verkleben, die in ihrem Gebrauch durch hohe Temperaturunterschiede belastet werden. Insbesondere können Metall und Kunststoff- oder Schaumstoffsubstrate miteinander verklebt werden. Bei einer erfindungsgemäß durchgeführten Verklebung ist zu beobachten, dass auch nach häufiger Belastung bei hoher Luftfeuchtigkeit oder durch Unterkühlung durch kondensierendes Wasser keine wesentliche Schwächung der Verklebung erfolgt. Beispielsweise kann man feststellen, dass nach wiederholtem Klimawechseltest, d.h. einer Belastung durch erhöhte Luftfeuchtigkeit und erhöhte Temperatur, kein Abfall der Festigkeit der Verklebung beobachtet wird.

Die Erfindung wird nun durch Beispiele exemplarisch erläutert.

| Beispiel | 1 | 2 | 3 | 4 |
|---|---|---|---|---|
| | (Vergleich) | | (erfindungsgemäß) | |
| | | | | |
| Rizinusöl | 0 | 0 | 15,5 | 15,5 |
| PPG 1000 | 0 | 0 | 27,0 | 27,0 |
| TDI | 0 | 0 | 2,7 | 2,7 |

Unter Ausschluss von Luftfeuchtigkeit werden die Polyole vermischt und mit dem Isocyanat bei 80°C umgesetzt.

### Trifunktionelles

| | | | | |
|---|---|---|---|---|
| Polyetherpolyol (M_{N} 450) | 8,5 | 7,5 | 7,5 | 0 |
| Trifunktionelles | | | | |
| Polyetherpolyole (M_{N} 750) | 0 | 0 | 0 | 10,0 |
| Ricinusöl | 18,0 | 18,0 | 2,5 | 0 |
| PPG 1000 | 28,7 | 27,0 | 0 | 0 |
| Molekularsieb | 5,0 | 5,0 | 5,0 | 5,0 |
| Füllstoff (CaCO3) | 39,7 | 39,7 | 39,7 | 39,7 |
| DABCO 33V | 0,1 | 0,1 | 0,1 | 0,1 |

Zu dem Polyurethandiolgemisch werden die weiteren Bestandteile gegeben, gemischt und eine Polyolkomponente hergestellt.

| | | | | |
|---|---|---|---|---|
| handelsübliches 4,4'- MDI, | 24,5 | 18,5 | 18,5 | 17,0 |
| (5 % 2,4-MDI, ca. 70% höherfunktioneller Anteil) | | | | |
| 2,4-TDI | 0 | 2,7 | 0 | 0 |
| Anteil gestrecktes Isocyanat (%) | 33 | 27 | 27 | 27 |

Zu der Polyolkomponente wird unmittelbar vor dem Verkleben die Vernetzerkomponente zugemischt. Danach werden Al-Prüfkörper bei Raumtemperatur verklebt. Nach 3 d Lagerung werden die Prüfkörper vermessen.

| | | | | |
|---|---|---|---|---|
| E- modul: +30°C (MPa) | 550 | 640 | 630 | 580 |
| - 60°C (MPa) | 5120 | 4910 | 4390 | 4270 |

Die Verklebungen zeigen ein gute Verklebung und eine gute Elastizität in der Kälte. Die Vergleichsversuche ergeben eine stärkere Temperaturabhängigkeit der Verklebung.

Vergleichsversuch 1 und 2 zeigen eine Herstellungsweise ohne OH-haltiges PU-Prepolymer als separate Stufe.

## Patentansprüche

1. 2-Komponenten-Polyurethanklebstoff bestehend aus einem OH-Polyurethanprepolymer, ggf. weiteren Polyolen sowie Additiven, hergestellt durch Umsetzung mindestens eines oleochemischen 2 bis 5 funktionellen Polyols und 5 bis 75 Gew.-% bezogen auf die Polyolkomponente weitere Polyole mit einem Molekulargewicht zwischen 200 bis 10000 g/mol mit einem Polyisocyanat A mit einem NCO:OH-Verhältnis von 1:2 bis 1:5 und einer Vernetzerkomponente aus einem Polyisocyanat B, **dadurch gekennzeichnet dass** das Polyisocyanat A eine gestreckte oder gewinkelte Form aufweist und das Polyisocyanat B ausgewählt wird aus Isocyanaten mit einer entgegengesetzten Form, wobei 20 bis 85 Mol.-% der Summe aus A und B eine gestreckte Form aufweisen müssen, die gestreckten Isocyanate nur in einer Komponente enthalten sind, und der vernetzte Klebstoff im Temperaturbereich zwischen -60 bis + 30°C eine Änderung des E-Modul, gemessen nach EN ISO 527-1, von weniger als 4000 MPa aufweist.

2. 2-K-PU-Klebstoff nach Anspruch 1, **dadurch gekennzeichnet, dass** die weiteren Polyole ausgewählt werden aus Polyether-, Polyester-, Polycarbonat- oder Polycaprolactonpolyolen mit einem Molekulargewicht von 1000 bis 6000 g/mol.

3. 2-K-PU-Klebstoff nach einem der Ansprüche 1 bis 2, **dadurch gekennzeichnet, dass** in der Polyolkomponente ein niedermolekularer Diol oder Triol mit einem Molekulargewicht von 200 bis 800 g/mol enthalten ist, insbesondere ein Polyetherpolyol.

4. 2-K-PU-Klebstoff nach einem der Ansprüche 1 bis 3, **dadurch gekennzeichnet, dass** die Vernetzerkomponente zu der Polyolkomponente ein NCO:OH-Verhältnis von 1,0 :1 bis 2,0:1 aufweist, insbesondere von 1,03: 1 bis 1,7:1.

5. 2-K-PU-Klebstoff nach einem der Ansprüche 1 bis 4, **dadurch gekennzeichnet, dass** das gestreckte Polyisocyanat in einer Menge von 25 bis 70 Mol.-%, bevorzugt von 30 bis 60 Mol.-%, enthalten ist.

6. 2-K-PU-Klebstoff nach einem der Ansprüche 1 bis 5, **dadurch gekennzeichnet, dass** das gestreckte Polyisocyanat als Polyisocyanat B enthalten ist.

7. 2-K-PU-Klebstoff nach einem der Ansprüche 1 bis 6, **dadurch gekennzeichnet, dass** als gewinkeltes Polyisocyanat räumlich gewinkelte und/oder polymere Isocyanate eingesetzt werden.

8. 2-K-PU-Klebstoff nach einem der Ansprüche 1 bis 7, **dadurch gekennzeichnet, dass** das gestreckte Polyisocyanat ein aromatisches Isocyanat ist.

9. 2-K-PU-Klebstoff nach einem der Ansprüche 1 bis 8, **dadurch gekennzeichnet, dass** der Klebstoff nach Vernetzung bei einer Temperatur von -60 °C einen E-Modul von weniger als 5000 MPa aufweist.

10. Verwendung eines 2K-PU-Klebstoffs nach Anspruch 1 bis 9 zum Verkleben von Metall- , Kunststoff- oder Schaumstoffsubstraten.

11. Verwendung eines 2K-PU-Klebstoffs nach Anspruch 10 zum Verkleben von Substraten, die eine Gebrauchstemperatur von -170°C bis +50°C aufweisen.

## Claims

1. A two-component polyurethane adhesive consisting of an OH polyurethane prepolymer, optionally additional polyols and additives, produced by reaction of at least one oleochemical 2- to 5-functional polyol and 5 to 75 wt.%, based on the polyol component, of additional polyols having a molecular weight of between 200 and 10000 g/mol with a polyisocyanate A at an NCO:OH ratio of from 1:2 to 1:5 and a cross-linking component based on a polyisocyanate B, **characterized in that** the polyisocyanate A has a linear or angled shape and the polyisocyanate B is selected from the isocyanates having an inverse shape, in which 20 to 85 mol.% of the sum of A and B must be linear, the linear isocyanates are only contained in one component and the cross-linked adhesive shows a change in elasticity modulus, measured in accordance with EN ISO 527-1, of less than 4000 MPa in a temperature range of from -60 to +30 °C.

2. The 2K PU adhesive according to claim 1, **characterized in that**, the additional polyols are selected from polyols of polyether, polyester, polycarbonate or polycaprolactone having a molecular weight of from 1000 to 6000 g/mol.

3. The 2K PU adhesive according to one of claims 1 to 2, **characterized in that** a low-molecular-weight diol or triol having a molecular weight of from 200 to 800 g/mol is contained in the polyol component, in particular a polyether polyol.

4. The 2K PU adhesive according to one of claims 1 to 3, **characterized in that** the NCO:OH ratio of cross-linking component to polyol component is from 1.0:1 to 2.0:1, in particular from 1.03:1 to 1.7:1.

5. The 2K PU adhesive according to one of claims 1 to 4, **characterized in that** the linear polyisocyanate is contained in an amount of from 25 to 70 mol.%, preferably from 30 to 60 mol.%.

6. The 2K PU adhesive according to one of claims 1 to 5, **characterized in that** the linear polyisocyanate is contained as a polyisocyanate B.

7. The 2K PU adhesive according to one of claims 1 to 6, **characterized in that** spatially angled and/or polymeric isocyanates are used as the angled polyisocyanate.

8. The 2K PU adhesive according to one of claims 1 to 7, **characterized in that** the linear polyisocyanate is an aromatic isocyanate.

9. The 2K PU adhesive according to one of claims 1 to 8, **characterized in that** after cross-linking the adhesive has an elasticity modulus of less than 5000 MPa at a temperature of -60 °C.

10. The use of a 2K PU adhesive according to claims 1 to 9 for bonding metal, plastics or foam substrates.

11. The use of a 2K PU adhesive according to claim 10 for bonding substrates that have a usage temperature of from -170 °C to +50 °C.

## Revendications

1. Adhésif au polyuréthane à deux composants, comprenant un prépolymère OH-polyuréthanne, éventuellement d'autres polyols et additifs, obtenu par réaction d'au moins un polyol oléochimique bi-à penta-fonctionnel et 5 à 75% en poids, sur la base du composant polyol, d'autres polyols d'un poids moléculaire entre 200 et 10 000 g/mol avec un polyisocyanate A dans un rapport NCO:OH de 1:2 à 1:5 et un composant de réticulation constitué d'un polyisocyanate B, **caractérisé en ce que** le polyisocyanate a une forme étirée ou courbée et le polyisocyanate B est choisi parmi les isocyanates de forme opposée, de 20 à 85% molaire de la somme de A et B devant avoir une forme étirée, les isocyanates étirées n'étant contenus que dans un composant et l'adhésif réticulé présentant une variation du module d'élasticité, mesuré selon EN ISO 527-1, inférieure à 4000 MPa dans la gamme de températures comprise entre -60 et +30°C.

2. Adhésif au polyuréthane à deux composants selon la revendication 1, **caractérisé en ce que** les autres polyols sont choisis parmi les polyols de polyéther, de polyester, de polycarbonate ou de polycaprolactone d'un poids moléculaire allant de 1000 à 6000 g/mol.

3. Adhésif au polyuréthane à deux composants selon l'une des revendications 1 à 2, **caractérisé en ce que** le composant polyol contient un diol ou un triol de faible poids moléculaire dont le poids moléculaire va de 200 à 800 g/mol, en particulier un polyol de polyéther.

4. Adhésif au polyuréthane à deux composants selon l'une des revendications 1 à 3, **caractérisé en ce que** le composant de réticulation a, par rapport au composant polyol, un rapport NCO:OH de 1,0:1 à 2,0:1, en particulier de 1,03:1 à 1,7:1.

5. Adhésif au polyuréthane à deux composants selon l'une des revendications 1 à 4, **caractérisé en ce que** le polyisocyanate étiré est contenu dans une quantité allant de 25 à 70% molaires, de préférence entre 30 et 60% molaires.

6. Adhésif au polyuréthane à deux composants selon l'une des revendications 1 à 5, **caractérisé en ce que** le polyisocyanate étiré est contenu sous forme de polyisocyanate B.

7. Adhésif au polyuréthane à deux composants selon l'une des revendications 1 à 6, **caractérisé en ce que** l'on utilise comme polyisocyanate courbé des isocyanates polymères et/ou courbées dans l'espace.

8. Adhésif au polyuréthane à deux composants selon l'une des revendications 1 à 7, **caractérisé en ce que** le polyisocyanate étiré est un isocyanate aromatique.

9. Adhésif au polyuréthane à deux composants selon l'une des revendications 1 à 8, **caractérisé en ce que** l'adhésif a, après réticulation à une température de -60°C, un module inférieur à 5000 MPa.

10. Utilisation d'un adhésif au polyuréthane à deux composants selon l'une des revendications 1 à 9 pour coller des substrats en métal, en matière plastique ou en matière alvéolaire.

11. Utilisation d'un adhésif au polyuréthane à deux composants selon la revendication 10, pour coller des substrats qui ont une température d'utilisation allant de -170°C à +50°C.
